# EUROPÄISCHE PATENTSCHRIFT

(11) **EP 2 507 648 B1**
(45) Veröffentlichungstag und Bekanntmachung des Hinweises auf die Patenterteilung: **14.12.2016**
(21) Anmeldenummer: 10762914.9
(22) Anmeldetag: 06.10.2010
(51) Int. Cl.: G01S 7/52, G01S 15/08, G01S 15/93

(54) **VERFAHREN ZUR ANPASSUNG DER EMPFINDLICHKEIT VON ULTRASCHALLSENSOREN**
METHOD FOR ADJUSTING THE SENSITIVITY OF ULTRASONIC SENSORS
PROCÉDÉ D'ADAPTATION DE LA SENSIBILITÉ DE CAPTEURS À ULTRASONS

(30) Priorität: 30.11.2009 DE 102009047284
(43) Veröffentlichungstag der Anmeldung: 10.10.2012
(73) Patentinhaber: Robert Bosch GmbH, 70442 Stuttgart (DE)
(72) Erfinder: KLOSS, Florian, 70499 Stuttgart (DE)
(86) Internationale Anmeldenummer: PCT/EP2010/064868
(87) Internationale Veröffentlichungsnummer: WO 2011/064025

(56) Entgegenhaltungen:
- GB-A- 2 443 206
- US-A- 4 500 977
- US-A- 5 059 946
- US-A- 5 235 315
- US-A1- 2009 251 990

## Beschreibung

### Stand der Technik

Die Erfindung betrifft ein Verfahren zur Anpassung der Empfindlichkeit von Ultraschallsensoren zur Abstandserkennung von Objekten zu einem Fahrzeug.

Insbesondere bei Systemen zur Einparkunterstützung für einen Fahrer eines Kraftfahrzeugs werden Systeme eingesetzt, die abstandsmessende Sensoren umfassen. Mit den abstandsmessenden Sensoren wird der Abstand zwischen dem Fahrzeug und einem Objekt erfasst. Hierzu wird bei gängigen Sensoren vom Sensor ein Signal gesendet und ein von einem Objekt reflektiertes Echo empfangen. Aus der Laufzeit des Signals zwischen Senden des Signals und Empfangen des Echos lässt sich der Abstand des Objekts zum Sensor ermitteln. Sensoren, die zur Abstandsmessung eingesetzt werden, sind derzeit zum Beispiel Ultraschallsensoren, Radarsensoren, Infrarotsensoren oder LIDAR-Sensoren.

Allen diesen Sensoren ist es gemeinsam, dass das gesendete Signal von einem Objekt, das sich im Sendekegel des Signals befindet, reflektiert wird, und das Echo vom Sensor empfangen wird. Ein Hinweis auf die Richtung zum Objekt lässt sich hierdurch nicht ermitteln.

Wenn der Sendekegel des gesendeten Signals einen Schnittpunkt mit dem Boden, zum Beispiel einer Straße, auf der das Fahrzeug fährt, aufweist, wird auch der Boden als Objekt in der Umgebung des Fahrzeugs detektiert. Da der Boden jedoch kein Hindernis darstellt, ist eine Detektion des Bodens und ein Hinweis auf ein Objekt in Entfernung des Abstandes zum Boden an den Fahrer nicht erwünscht.

Das Dokument US 5,235,315 A beschreibt ein Verfahren zur Anpassung der Betriebsparameter eines Ultraschallsensors zur Abstandserkennung an einem Fahrzeug. Dabei sind zwei Betriebsmodi vorgesehen. Der erste Betriebsmodus ist ein Selbsttestmodus, indem eine Schallkeule gesendet wird, die einen Schnittpunkt mit dem Boden aufweist, wodurch Bodenechos zum Sensor zurückreflektiert werden, und durch die Erfassung der Echosignale die Betriebstüchtigkeit des Sensors festgestellt wird. Der zweite Betriebsmodus ist ein Hinderniserkennungsmodus, indem die Schallkeule derart angepasst wird, dass keine Reflektion des Schalls vom Boden mehr stattfindet.

In der Schrift US 2009/0251990 A1 ist eine Methode zum Selbsttest eines Ultraschallsensors an einem Fahrzeug beschrieben. Die Schallkeule des Ultraschallsensors trifft auf den Boden und ein Bodenecho wird zum Ultraschallecho zurückreflektiert. Gelingt es, dieses Bodenecho zu detektieren, wird der Ultraschallsensor als Betriebsbereit eingestuft.

Das Dokument US 4,500,977 A beschreibt einen Schaltkreis zum Messen und zum Anzeigen einer Distanz zwischen einem Fahrzeugen und benachbarten Objekten. Zu diesem Zweck werden drei verschiedene Sensortypen verwendet, ein erster Sensortyp mit großem Öffnungswinkel und einer Reichweite von 0,3 bis 5 m, genannt "Parkmaster"; ein zweiter Sensortyp mit einem kleinen Öffnungswinkel und einer Reichweite von 0,3 bis 5 m, genannte "Passage-Height-Gauge"; und ein dritter Sensortyp mit einem mittleren Öffnungswinkel und einer Reichweite von 0 bis 2 m, genannt "Distance-Gauge". Somit unterscheiden sich die Sensortypen in ihrer Reichweite und ihrer Empfindlichkeit. Für die verschiedenen Messmodi müssen zusätzlich Basisparameter hinterlegt werden, beispielsweise für den Modus "Passage-Height-Gauge", die effektive Ladehöhe des Fahrzeugs in Abhängigkeit der Ladung, des Gewichts und des Reifendrucks, so dass in dem Modus bestimmt werden kann, ob die Ladehöhe des Fahrzeugs kleiner als die Durchfahrtshöhe ist, und somit das Fahrzeug die Brückenpassage passieren kann, ohne diese oder sich zu beschädigen.

Aus DE-T 601 17 407 ist ein Verfahren bekannt, durch das bei Verwendung von Radarsensoren ausgeschlossen werden kann, dass der Boden als Objekt, das ein Hindernis sein kann, detektiert wird. Hierzu wird nach Einbau des Sensors eine Messung durchgeführt und die gemessenen Signale werden als Grundrauschen gespeichert. Zur Detektion von Objekten wird dieses Grundrauschen dann von gemessenen Signalen subtrahiert.

Das in DE-T 601 17 407 offenbarte Verfahren lässt sich jedoch nicht auf Ultraschallsensoren anwenden. Derzeit erfolgt eine Einstellung von Ultraschallsensoren nach dem Einbau in einem Fahrzeug. Um nur Hindernisse und nicht den Boden zu detektieren, ergibt sich hierdurch zum Beispiel eine Einschränkung bei der Einbauhöhe der Ultraschallsensoren und eine Einschränkung der Blickrichtung der Sensoren. Zudem ist ein Einsatz insbesondere im Bereich der Nutzkraftfahrzeuge nur begrenzt möglich, da durch große Höhendifferenzen durch verschiedene Beladungszustände und/oder die Niveauregulierung der Fahrzeuge eine Einstellung der Sensoren jeweils an das Niveau des Fahrzeugs angepasst werden müsste, um zu verhindern, dass bei variierenden Abständen der Sensoren zum Boden nicht die Fahrbahn detektiert wird.

### Offenbarung der Erfindung

### Vorteile der Erfindung

Das erfindungsgemäße Verfahren zur Anpassung der Empfindlichkeit von Ultraschallsensoren zur Abstandserkennung von Objekten zu einem Fahrzeug umfasst folgende Schritte:
(a) Einstellen einer Sensorempfindlichkeit, die so gewählt wird, dass vom Ultraschallsensor eine Schallkeule gesendet wird, die einen Schnittpunkt mit dem Boden aufweist,
(b) Durchführen einer Messung mit dem Ultraschallsensor, wobei Objekte in der Umgebung des Fahrzeugs eine größere Entfernung zum Fahrzeug aufweisen als der Abstand vom Ultraschallsensor zum Schnittpunkt der Schallkeule mit dem Boden, so dass der Abstand vom Ultraschallsensor zum Schnittpunkt der Schallkeule mit dem Boden als kürzester Abstand zu einem Objekt detektiert wird,
(c) Einstellen der Empfindlichkeit des Ultraschallsensors in Abhängigkeit von dem in Schritt (b) detektierten Abstand zwischen Ultraschallsensor und Schnittpunkt der Schallkeule mit dem Boden, so dass nach dem Einstellen die Schallkeule an ihrem dem Boden nächstgelegenen Punkt einen vorgegebenen Abstand zum Boden nicht unterschreitet.

Als Schallkeule im Rahmen der vorliegenden Erfindung wird der Bereich bezeichnet, in dem ein vom Ultraschallsensor gesendetes Signal so stark ist, dass das von einem Objekt reflektierte Echo des Signals noch vom Ultraschallsensor empfangen und als zum gesendeten Signal zugehöriges Echo detektiert werden kann.

Der Schnittpunkt der Schallkeule mit dem Boden ist abhängig von der Einbauhöhe der Ultraschallsensoren. Durch das erfindungsgemäße Verfahren kann somit sichergestellt werden, dass ein die Ultraschallsensoren zur Abstandserkennung umfassendes System zur Unterstützung des Fahrers beim Führen des Fahrzeuges unabhängig von der Einbauhöhe der Ultraschallsensoren funktioniert. Mit dem erfindungsgemäßen Verfahren kann die Empfindlichkeit der Ultraschallsensoren immer optimal auf die Einbauhöhe der Ultraschallsensoren im Fahrzeug angepasst werden. Die Empfindlichkeit der Sensoren wird dabei immer so eingestellt, dass eine Detektion des Bodens nicht erfolgt. Wenn der Boden detektiert wird, ist die eingestellte Empfindlichkeit der Ultraschallsensoren zu hoch. Andererseits müssen jedoch flache Hindernisse erkannt werden. Sollten flache Hindernisse nicht erkannt werden, so ist die Empfindlichkeit der Ultraschallsensoren zu niedrig. Der vorgegebene Abstand zwischen dem dem Boden nächstgelegenen Punkt der Schallkeule und dem Boden wird dabei so gewählt, dass flache Hindernisse noch detektiert werden und vorzugsweise weiterhin so, dass bei einer Niveauänderung des Fahrzeugs, zum Beispiel durch Beladung, eine erneute Einstellung der Empfindlichkeit nicht notwendig ist. Alternativ ist es jedoch selbstverständlich auch möglich, insbesondere wenn eine Niveauänderung und damit eine Änderung in der Einbauhöhe der Ultraschallsensoren erfolgt ist, die Empfindlichkeit der Ultraschallsensoren in Abhängigkeit von der geänderten Einbauhöhe neu einzustellen.

Vor dem Einstellen der Empfindlichkeit des Ultraschallsensors wird aus dem Abstand zwischen Ultraschallsensor und Schnittpunkt der Schallkeule mit dem Boden die Einbauhöhe des Ultraschallsensors bestimmt. Dies hat den Vorteil, dass die Einstellung der Empfindlichkeit des Ultraschallsensors direkt in Abhängigkeit von der Einbauhöhe erfolgen kann. Hierzu ist es zum Beispiel möglich, eine Kennlinie zu hinterlegen, in der jeweiligen Empfindlichkeiten des Ultraschallsensors der Einbauhöhe zugeordnet werden. Da die Einbauhöhe bei konstantem Öffnungswinkel der Schallkeule jedoch unmittelbar von dem Abstand des Schnittpunktes der Schallkeule mit dem Boden und dem Ultraschallsensor abhängig ist, kann die Einstellung der Empfindlichkeit selbstverständlich auch direkt aus dem in Schritt (b) detektierten Abstand zwischen Schnittpunkt der Schallkeule mit dem Boden und dem Ultraschallsensor ermittelt werden.

Um den Abstand des Schnittpunktes der Schallkeule mit dem Boden zum Ultraschallsensor eindeutig der Einbauhöhe zuordnen zu können, ist es zum Beispiel möglich, jeweils in Abhängigkeit von der Empfindlichkeit der Ultraschallsensoren eine dem gemessenen Abstand zwischen Schnittpunkt der Schallkeule mit dem Boden und Ultraschallsensor zugeordnete Einbauhöhe zu hinterlegen. Alternativ ist es jedoch auch möglich, die Einbauhöhe aus dem Abstand von Ultraschallsensor zum Schnittpunkt der Schallkeule mit dem Boden und der Empfindlichkeit des Ultraschallsensors zu berechnen.

Die Durchführung der Messung mit dem Ultraschallsensor in Schritt (b) erfolgt vorzugsweise dann, wenn das System nicht benötigt wird. Dies ist zum Beispiel der Fall bei einer Fahrt bei höheren Geschwindigkeiten oder auch im Stand, da das System im Allgemeinen benötigt wird, wenn das Fahrzeug einparkt und sich somit langsam bewegt.

Als Fahrten mit höherer Geschwindigkeit werden im Rahmen der vorliegenden Erfindung insbesondere Fahrten mit einer Geschwindigkeit von mehr als 30 km/h verstanden. Um zu gewährleisten, dass eine Messung im Stand durchgeführt wird, ist es bevorzugt, eine Messung im Stand nur dann durchzuführen, wenn kein Gang eingelegt ist und/oder die Feststellbremse betätigt ist. Üblicherweise wird ein Fahrzeug nicht mit betätigter Feststellbremse bewegt. Ein Fahrzeug, bei dem kein Gang eingelegt ist, lässt sich nicht bewegen.

Wenn das erfindungsgemäße Verfahren zur Anpassung der Empfindlichkeit von Ultraschallsensoren im Stand durchgeführt wird, ist jedoch zusätzlich darauf zu achten, dass sich keine Objekte näher am Ultraschallsensor befinden als der Schnittpunkt der Schallkeule mit dem Boden. Sollte sich ein Objekt näher am Fahrzeug befinden, so würde dies zu einer fehlerhaften Einstellung der Empfindlichkeit der Ultraschallsensoren führen und die eingestellte Schallkeule hätte einen Schnittpunkt mit dem Boden, so dass im Betrieb des Systems der Boden detektiert werden würde.

Um die in Schritt (c) eingestellte Empfindlichkeit der Ultraschallsensoren bzw. die durch das erfindungsgemäße Verfahren ermittelte Einbauhöhe der Ultraschallsensoren zu verifizieren, werden mindestens zwei unterschiedliche Empfindlichkeiten des Ultraschallsensors eingestellt, mit jeder der Empfindlichkeiten der Abstand vom Ultraschallsensor zum Schnittpunkt der jeweiligen Schallkeule mit dem Boden bestimmt wird, aus den Abständen jeweils die Einbauhöhe berechnet wird und die berechneten Einbauhöhen miteinander verglichen werden. Durch den Vergleich lässt sich feststellen, ob die Messungen korrekte Ergebnisse geliefert haben. Wenn sich unterschiedliche Einbauhöhen ergeben, muss die Messung wiederholt werden, da mindestens eines der Ergebnisse fehlerhaft ist. Um Messtoleranzen und Rundungsfehler bei der Bestimmung der Einbauhöhe zu berücksichtigen, ist es nicht notwendig, dass die bei den unterschiedlichen Empfindlichkeiten bestimmten Einbauhöhen identisch sind, sie sollten jedoch eine vorgegebene Maximaldifferenz nicht überschreiten. Die vorgegebene Maximaldifferenz ist dabei abhängig vom eingesetzten System und den zu erwartenden Messungenauigkeiten und Rundungsfehlern.

Zur Verifikation können zum Beispiel zwei vorgegebene unterschiedliche Empfindlichkeiten des Ultraschallsensors eingesetzt werden. Alternativ ist es auch möglich, mehrere, zum Beispiel sich kontinuierlich ändernde Empfindlichkeiten der Ultraschallsensoren zu verwenden. Zur Verifikation ist es jeweils lediglich notwendig, dass ein Schnittpunkt der Schallkeule mit dem Boden existiert.

In einer bevorzugten Ausführungsform der Erfindung erfolgt die Verifikation der Einstellung der Empfindlichkeit während des Betriebs des Fahrzeugs fortlaufend. Dies hat den Vorteil, dass durch die fortlaufende Verifikation auch Unterschiede in der Einbauhöhe, die sich zum Beispiel durch unterschiedliche Höhendifferenzen zum Beispiel aufgrund unterschiedlicher Beladungszustände und/oder der Niveauregulierung des Fahrzeugs ergeben, ausgeglichen werden können. Die Ultraschallsensoren werden jeweils abhängig vom Fahrzeugniveau, das sich zum Beispiel durch den Beladungszustand oder eine Niveauregulierung ergibt, eingestellt.

Die Einstellung der Empfindlichkeit des Ultraschallsensors kann zum Beispiel mit einer hinterlegten Sensorkennlinie erfolgen. Alternativ ist es auch möglich, zur Einstellung der Empfindlichkeit des Ultraschallsensors eine an die Situation angepasste Kennlinie zu ermitteln. Wenn eine hinterlegte Kennlinie verwendet wird, so wird insbesondere die Abstrahlcharakteristik des Ultraschallsensors und damit auch der Umrechnungsfaktor des Abstandes bei einer vorgegebenen Empfindlichkeit für die Einbauhöhe hinterlegt.

Dieser Umrechnungsfaktor kann zum Beispiel vor dem Einbau des Ultraschallsensors durch Kalibrierungsmessungen ermittelt werden. Eine an die momentane Situation angepasste Sensorkennlinie kann zum Beispiel durch Variation einzelner Kennlinienstützstellen ermittelt werden. Als Kennlinienstützstelle wird ein Grenzwert bezeichnet, der definiert, welche Echoamplitude bei einer bestimmten Entfernung im Messbereich mindestens vorhanden sein muss, um eine Auswertung durchführen zu können. Auf diese Weise wird die Empfindlichkeit in Abhängigkeit von der Entfernung reguliert. Somit kann für jede Stützstelle, das heißt jede Entfernung beziehungsweise jeden Enfernungsbereich, die zur Ermittlung der Sensorkennlinie erfasst werden, ermittelt werden, bei welcher Amplitude beziehungsweise Empfindlichkeit der Boden detektiert wird. Es ist zum Beispiel möglich, für jede Entfernung zunächst sehr empfindlich zu beginnen, dann die Empfindlichkeit zu senken und so zu ermitteln, ab welcher Empfindlichkeit der Boden nicht mehr detektiert wird. Zu diesem Wert kann noch ein Sicherheitswert addiert werden, um ein Bodenecho zu verhindern.

Das erfindungsgemäße Verfahren eignet sich zum Beispiel zur Verwendung bei Systemen zur Unterstützung des Fahrers beim Einparken, die nachträglich an ein Fahrzeug montiert werden können, als auch zur Verwendung von Systemen, die in Nutzfahrzeugen eingesetzt werden.

### Kurze Beschreibung der Zeichnungen

Ausführungsbeispiele der Erfindung sind in den Figuren dargestellt und werden in der nachfolgenden Beschreibung näher erläutert.

Es zeigen:
- Figur 1: eine schematische Darstellung zur Abstandsbestimmung bei unterschiedlichen Einbauhöhen,
- Figur 2: eine schematische Darstellung zur Abstandsbestimmung bei verschiedenen Sensorempfindlichkeiten,
- Figur 3: eine Darstellung der Sensorkennlinie bei eingestellter Sensorempfindlichkeit
- Figur 4: eine für unterschiedliche Einbauhöhen eingestellte geeignete Empfindlichkeit des Ultraschallsensors.

### Ausführungsbeispiele der Erfindung

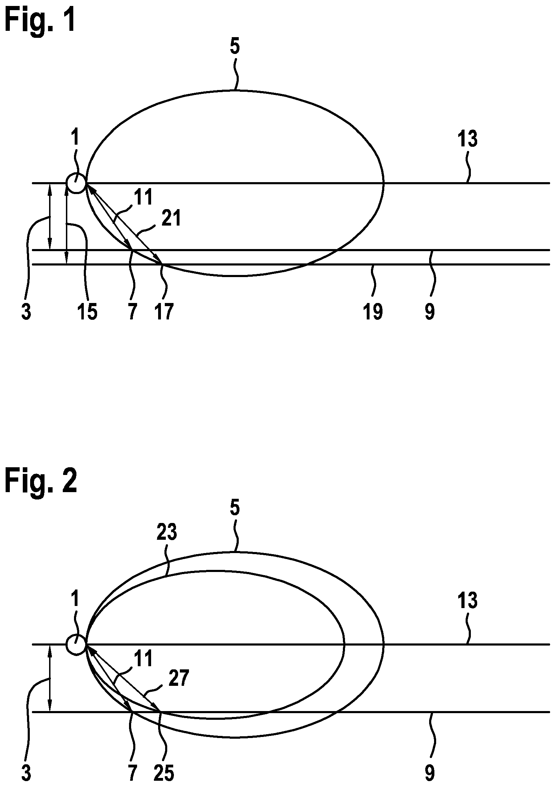

In Figur 1 ist eine schematische Darstellung zur Abstandsbestimmung bei unterschiedlichen Einbauhöhen gezeigt.

Um die Empfindlichkeit eines zur Abstandserkennung verwendeten Ultraschallsensors 1 so einzustellen, dass im Betrieb eines den Ultraschallsensor verwendenden Systems, zum Beispiel einem System zur Einparkunterstützung, der Boden nicht als Hindernis detektiert wird, muss die Empfindlichkeit des Ultraschallsensors 1 an seine Einbauhöhe 3 angepasst sein. Bei einer zu hohen Empfindlichkeit des Ultraschallsensors 1 ist eine vom Ultraschallsensor 1 gesendete Schallkeule 5 so gestaltet, dass diese einen Schnittpunkt 7 mit dem Boden 9 aufweist. Dies führt dazu, dass vom Boden 9 das vom Ultraschallsensor 1 gesendete Signal reflektiert wird, und das reflektierte Echo empfangen wird. Der Boden 9 wird auf diese Weise ebenfalls als Objekt im Bereich des Ultraschallsensors 1 detektiert. Da der Boden 9 jedoch kein Hindernis darstellt, sind Informationen über den Abstand des Bodens 9 zum Ultraschallsensor 1 nicht gewünscht. Aus diesem Grund muss die Empfindlichkeit des Ultraschallsensors 1 so eingestellt werden, dass die Schallkeule 5 im laufenden Betrieb keinen Schnittpunkt 7 mit dem Boden 9 aufweist.

Um die Empfindlichkeit des zur Abstandsmessung eingesetzten Ultraschallsensors 1 so einzustellen, dass im laufenden Betrieb der Boden 9 nicht detektiert wird, wird zunächst eine hohe Empfindlichkeit des Ultraschallsensors 1 eingestellt. Durch die hohe Empfindlichkeit des Ultraschallsensors 1 ergibt sich ein Schallkegel 5, der einen Schnittpunkt 7 mit dem Boden 9 aufweist. Nachdem die Empfindlichkeit des Ultraschallsensors 1 so eingestellt wurde, dass der Schallkegel 5 einen Schnittpunkt 7 mit dem Boden 9 aufweist, wird eine Messung mit dem Ultraschallsensor 1 durchgeführt. Hierzu wird vom Ultraschallsensor 1 ein Schallimpuls ausgesendet. Der Schallimpuls wird vom Boden 9 reflektiert und das so reflektierte Echo erneut vom Ultraschallsensor 1 empfangen. Aus der Laufzeit des Signals lässt sich auf diese Weise unter Berücksichtigung der Schallgeschwindigkeit der Abstand des Ultraschallsensors 1 zu dem Punkt berechnen, an dem der Schallpuls reflektiert wurde. Wenn sich ein Schnittpunkt der Schallkeule 5 mit dem Boden 9 ergibt, und sich kein weiteres Objekt im Bereich der Schallkeule 5 befindet, ist der kürzeste vom Ultraschallsensor 1 detektierte Abstand der Abstand 11 des Schnittpunktes 7 der Schallkeule 5 mit dem Boden 9 zum Ultraschallsensor 1. Da die Schallkeule 5 üblicherweise nicht im rechten Winkel zur Achse 13 des Ultraschallsensors verläuft, entspricht der detektierte Abstand 11 nicht dem kürzesten Weg zwischen Ultraschallsensor 1 und Boden 9 und somit nicht der Einbauhöhe 3.

Aus der eingestellten Empfindlichkeit des Ultraschallsensors 1 und der durch die Empfindlichkeit vorgegebenen Schallkeule 5, die bekannt ist, lässt sich jedoch aus dem Abstand 11 des Schnittpunktes 7 der Schallkeule 5 mit dem Boden 9 zum Ultraschallsensor 1 die Einbauhöhe 3 bestimmen. So ist es zum Beispiel möglich, zu jeden möglichen Abstand 11 bei maximal möglicher Empfindlichkeit des Ultraschallsensors 1 die jeweils zu jedem Abstand 11 gehörende Einbauhöhe 3 abzuspeichern. Alternativ ist es auch möglich, bei bekannter Schallkeule 5 und damit bei jeweils klar definiertem Schnittpunkt der Schallkeule 5 mit dem Boden 9 bei einem bekannten Abstand 11 die jeweilige Einbauhöhe 3 zu berechnen.

Die Ermittlung der Einbauhöhe 3 aus dem gemessenen Abstand 11 des Schnittpunktes der Schallkeule 5 mit dem Boden 9 und dem Ultraschallsensor 1 kann zum Beispiel während der Fahrt oder auch im Stand erfolgen. Wenn die Messung während der Fahrt des Fahrzeugs erfolgt, so wird diese vorzugsweise dann durchgeführt, wenn sich das Fahrzeug mit einer höheren Geschwindigkeit, zum Beispiel mit einer Geschwindigkeit von mehr als 15 km/h bewegt. Eine solche Geschwindigkeit zeigt an, dass das Fahrzeug gerade keine Rangiermanöver, zum Beispiel Parkmanöver, vornimmt und das System nicht genutzt wird. Zudem befindet sich üblicherweise während der Fahrt kein Objekt innerhalb der Schallkeule 5.

Zum Vergleich ist in Figur 1 auch die Abstandsbestimmung bei einer größeren Einbauhöhe dargestellt.

Bei einer größeren Einbauhöhe 15 verschiebt sich der Schnittpunkt 17 der Schallkeule 5 mit dem Boden 19 nicht nur in Richtung der größeren Einbauhöhe 15 sondern auch in axialer Richtung. Der gemessene Abstand 21 zwischen dem Ultraschallsensor 1 und dem Schnittpunkt 17 der Schallkeule 5 mit dem Boden 19 ist somit ebenfalls deutlich größer. Auch hier tritt noch ein Schnittpunkt der Schallkeule 5 mit dem Boden 19 auf, so dass sich die größere Einbauhöhe 15 aus dem größeren Abstand 21 ermitteln lässt.

Insbesondere bei einem Nutzfahrzeug bei dem sich die Einbauhöhe 3,15 des Ultraschallsensors 1 zum Boden 9, 19 zum Beispiel aufgrund des Beladungszustandes und/oder aufgrund der Niveauregulierung ändern kann, ist es zum Beispiel möglich, die Einbauhöhe 15 einmal mit leerem Fahrzeug zu bestimmen und einmal die Einbauhöhe 3 mit beladenem Fahrzeug. Die Empfindlichkeit der Ultraschallsensoren 1 kann dann so eingestellt werden, dass die Schallkeule sowohl bei leerem Fahrzeug als auch bei beladenen Fahrzeug keinen Schnittpunkt mit dem Boden 9, 19 aufweist und auf diese Weise immer zur Abstandskennung bei Rangiermanövern verwendet werden kann.

In Figur 2 ist schematisch eine Abstandsbestimmung bei verschiedenen Sensorempfindlichkeiten dargestellt. Um die Einbauhöhe 3, die gemäß dem in Figur 1 beschriebenen Verfahren ermittelt wurde, zu verifizieren, ist es zum Beispiel möglich, eine zweite Messung mit einer geringeren Empfindlichkeit des Ultraschallsensors durchzuführen. Wenn eine Messung mit einer geringeren Empfindlichkeit durchgeführt wird, ergibt sich eine von der Schallkeule 5 verschiedene zweite Schallkeule 23. Aufgrund der geringeren Empfindlichkeit der zweiten Schallkeule 23 weist diese einen Schnittpunkt 25 mit dem Boden 9 auf, der eine größere axiale Entfernung zum Ultraschallsensor 1 aufweist. Dies führt auch dazu, dass der Abstand 27 vom Schnittpunkt 25 zum Ultraschallsensor 1 größer ist als der Abstand 11 des Schnittpunktes der Schallkeule 5 mit dem Boden 9. Bei bekannter Sensorcharakteristik und damit bei bekanntem Verlauf der Schallkeule 23, die sich bei einer geringeren Empfindlichkeit des Ultraschallsensors 1 ergibt, kann ebenfalls direkt aus dem Abstand des Schnittpunktes 25 der Schallkeule 23 mit dem Boden 9 zum Ultraschallsensor 1 auf die Einbauhöhe 3 geschlossen werden. Bei korrekter Messung sollten sich für die mit den unterschiedlichen Empfindlichkeiten bestimmten Einbauhöhen 3 jeweils im Wesentlichen gleiche Werte ergeben. Die Werte für die Einbauhöhe 3 können sich dabei zum Beispiel aufgrund von Messungenauigkeiten und Rundungsfehlern unterscheiden. Bei einem zu großen Unterschied der mit den unterschiedlichen Empfindlichkeiten bestimmten Einbauhöhe 3 sollte die Messung wiederholt werden. Als zu großer Unterschied wird dabei ein Unterschied bezeichnet, der einen vorgegebenen Wert überschreitet. Der vorgegebene Wert wird dabei abhängig gemacht von möglichen Messungenauigkeiten, die sich zum Beispiel aus der Art des eingesetzten Ultraschallsensors ergeben können, und den Rundungsfehlern, die sich beispielsweise aufgrund der Berechnung des Abstands ergeben.

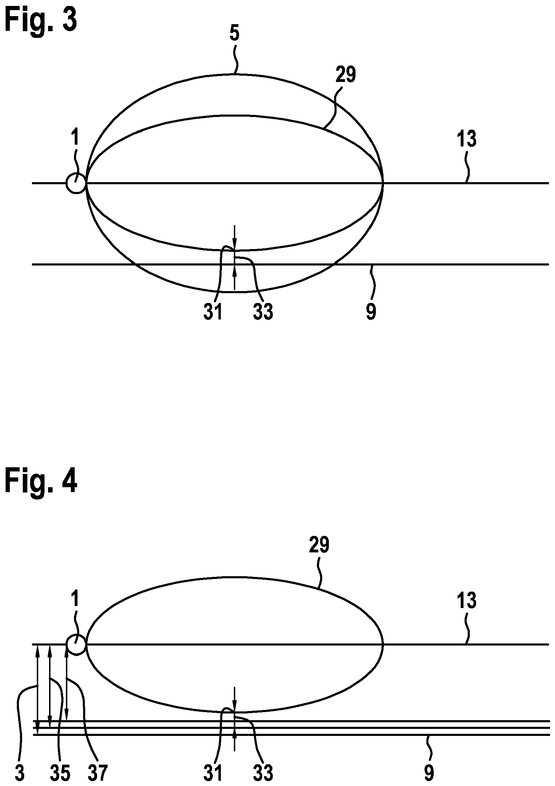

In Figur 3 ist eine Schallkeule bei eingestellter Sensorempfindlichkeit im Vergleich zu einer Schallkeule bei maximal möglicher Sensorempfindlichkeit dargestellt.

Die Schallkeule 5 mit maximaler Empfindlichkeit wird verwendet, um die Einbauhöhe 3 des Ultraschallsensors 1 zum Boden 9 zu bestimmen. Um den Sensor jedoch einsetzen zu können, um den Abstand zu Hindernissen zu ermitteln, insbesondere bei einem Einparkvorgang, ist es notwendig, dass vom Ultraschallsensor
1 der Boden 9 nicht detektiert wird. Aufgrund der im Allgemeinen geringen Einbauhöhe 3 des Ultraschallsensors 1 stellt sonst der Boden immer das dem Ultraschallsensor 1 nächstliegende Objekt dar und der Ultraschallsensor 1 kann nicht zur Unterstützung des Fahrers genutzt werden. Um zu vermeiden, dass der Boden 9 vom Ultraschallsensor 1 detektiert wird, wird die Empfindlichkeit des Ultraschallsensors 1 so gewählt, dass sich eine Schallkeule 29 ergibt, die an ihrem dem Boden nächstgelegenen Punkt 31 einen Abstand 33 zum Boden 9 aufweist, der einen vorgegebenen Abstand nicht unterschreitet. Der vorgegebene Abstand wird dabei so gewählt, dass einerseits der Boden 9 nicht als Hindernis erkannt wird, andererseits jedoch auch flache Hindernisse, insbesondere solche, die eine solche Höhe aufweisen, dass ein Überfahren zu einer Beschädigung des Fahrzeugs führen könnte, detektiert werden.

Der vorgegebene Abstand zwischen dem Boden 9 nächstliegenden Punkt 31 der Schallkeule 29 und dem Boden 9 wird vorzugsweise weiterhin so gewählt, dass bei Schwankungen der Einbauhöhe 3, die sich zum Beispiel durch unterschiedliche Beladungszustände oder aufgrund der Einstellung der Niveauregulierung ergeben können, jeweils keine Berührung der Schallkeule 29 mit dem Boden 9 erfolgt. Dies ist beispielhaft für drei unterschiedliche Niveaus in Figur 4 dargestellt.

In Figur 4 ist einmal eine Einbauhöhe 3 für ein leeres Fahrzeug, eine Einbauhöhe 35 bei einem Fahrzeug mit mittlerer Beladung und eine Einbauhöhe 37 für ein vollbeladenes Fahrzeug dargestellt. Um jeweils den optimalen Abstand 33 zwischen der Schallkeule 29 und dem Boden 9 zu erhalten, ist es neben einer festen Einstellung der Empfindlichkeit der Ultraschallsensoren 1 auch möglich, die Einbauhöhe 3 fortlaufend zu ermitteln und die Empfindlichkeit jeweils an den aktuellen Beladungszustand bzw. die aktuelle Einbauhöhe 3 anzupassen. Die fortlaufende Ermittlung der Einbauhöhe 3 kann dabei ebenfalls entweder im Stand oder während der Fahrt des Fahrzeugs erfolgen. Wenn die Ermittlung während der Fahrt des Fahrzeugs erfolgt, so werden hierzu insbesondere solche Fahrten ausgewählt, bei denen das System zur Hinderniserkennung nicht im Einsatz ist, das heißt insbesondere Fahrten mit höherer Geschwindigkeit.

## Patentansprüche

1. Verfahren zur Anpassung der Empfindlichkeit von Ultraschallsensoren (1) zur Abstandserkennung von Objekten zu einem Fahrzeug, folgende Schritte umfassend:
(a) Einstellen einer Sensorempfindlichkeit, die so gewählt wird, dass vom Ultraschallsensor (1) eine Schallkeule (5) gesendet wird, die einen Schnittpunkt (7) mit dem Boden aufweist,
(b) Durchführen einer Messung mit dem Ultraschallsensor (1), wobei Objekte in der Umgebung des Fahrzeugs eine größere Entfernung zum Fahrzeug aufweisen, als der Abstand (11) vom Ultraschallsensor (1) zum Schnittpunkt (7) der Schallkeule (5) mit dem Boden (9), so dass der Abstand (11) vom Ultraschallsensor (1) zum Schnittpunkt (7) der Schallkeule (5) mit dem Boden (9) als kürzester Abstand zu einem Objekt detektiert wird,
(c) Einstellen der Empfindlichkeit des Ultraschallsensors (1) in Abhängigkeit von dem in Schritt (b) detektierten Abstand (11) zwischen Ultraschallsensor (1) und Schnittpunkt (7) der Schallkeule (5) mit dem Boden (9), so dass nach dem Einstellen der Empfindlichkeit die Schallkeule an ihrem dem Boden (9) nächstgelegenen Punkt (31) einen vorgegebenen Abstand (33) zum Boden (9) nicht unterschreitet,
**dadurch gekennzeichnet, dass**
vor dem Einstellen der Empfindlichkeit des Ultraschallsensors (1) aus dem Abstand (11) zwischen Ultraschallsensor (1) und Schnittpunkt (7) der Schallkeule (5) mit dem Boden (9) die Einbauhöhe (3) des Ultraschallsensors (1) bestimmt wird und dass zur Verifikation der ermittelten Einbauhöhe (3) mindestens zwei unterschiedliche Empfindlichkeiten des Ultraschallsensors (1) eingestellt werden, mit jeder der Empfindlichkeiten der Abstand vom Ultraschallsensor (1) zum Schnittpunkt (7, 25) der jeweiligen Schallkeule (5, 23) mit dem Boden (9) bestimmt wird, aus den Abständen (11, 27) jeweils die Einbauhöhe (3) berechnet wird und die berechneten Einbauhöhen (3) miteinander verglichen werden.

2. Verfahren gemäß Anspruch 1, **dadurch gekennzeichnet, dass** die Messung in Schritt (b) während der Fahrt bei höheren Geschwindigkeiten oder im Stand durchgeführt wird.

3. Verfahren gemäß Anspruch 2, **dadurch gekennzeichnet, dass** die Messung nur dann im Stand durchgeführt wird, wenn kein Gang eingelegt ist und/oder die Feststellbremse betätigt ist.

4. Verfahren gemäß Anspruch 1, **dadurch gekennzeichnet, dass** die Verifikation der Einstellung der Empfindlichkeit während des Betriebs des Fahrzeugs fortlaufend erfolgt.

5. Verfahren gemäß einem der Ansprüche 1 bis 4, **dadurch gekennzeichnet, dass** die Einstellung der Empfindlichkeit des Ultraschallsensors (1) mit einer hinterlegten Sensorkennlinie erfolgt.

6. Verfahren gemäß einem der Ansprüche 1 bis 5, **dadurch gekennzeichnet, dass** zur Einstellung der Empfindlichkeit des Ultraschallsensors (1) eine an die Situation angepasste Kennlinie ermittelt wird.

## Claims

1. Method for adjusting the sensitivity of ultrasonic sensors (1) for detecting the distance between objects and a vehicle, comprising the following steps of:
(a) setting a sensor sensitivity which is selected in such a manner that the ultrasonic sensor (1) emits a sound lobe (5) which has a point of intersection (7) with the ground,
(b) carrying out a measurement using the ultrasonic sensor (1), objects in the environment of the vehicle being at a greater distance from the vehicle than the distance (11) between the ultrasonic sensor (1) and the point of intersection (7) of the sound lobe (5) with the ground (9), with the result that the distance (11) between the ultrasonic sensor (1) and the point of intersection (7) of the sound lobe (5) with the ground (9) is detected as the shortest distance to an object,
(c) setting the sensitivity of the ultrasonic sensor (1) on the basis of the distance (11) detected in step (b) between the ultrasonic sensor (1) and the point of intersection (7) of the sound lobe (5) with the ground (9), with the result that, after the sensitivity has been set, the sound lobe does not undershoot a predefined distance (33) to the ground (9) at its point (31) closest to the ground (9),
**characterized in that**
before the sensitivity of the ultrasonic sensor (1) is set, the installation height (3) of the ultrasonic sensor (1) is determined from the distance (11) between the ultrasonic sensor (1) and the point of intersection (7) of the sound lobe (5) with the ground (9), and **in that**, in order to verify the installation height (3) which has been determined, at least two different sensitivities of the ultrasonic sensor (1) are set, the distance between the ultrasonic sensor (1) and the point of intersection (7, 25) of the respective sound lobe (5, 23) with the ground (9) is determined with each of the sensitivities, the installation height (3) is respectively calculated from the distances (11, 27) and the calculated installation heights (3) are compared with one another.

2. Method according to Claim 1, **characterized in that** the measurement in step (b) is carried out while travelling at relatively high speeds or when stationary.

3. Method according to Claim 2, **characterized in that** the measurement is carried out when stationary only when no gear has been engaged and/or the parking brake has been actuated.

4. Method according to Claim 1, **characterized in that** the setting of the sensitivity is continuously verified during operation of the vehicle.

5. Method according to one of Claims 1 to 4, **characterized in that** the sensitivity of the ultrasonic sensor (1) is set using a stored sensor characteristic curve.

6. Method according to one of Claims 1 to 5, **characterized in that** a characteristic curve adapted to the situation is determined for the purpose of setting the sensitivity of the ultrasonic sensor (1).

## Revendications

1. Procédé d'adaptation de la sensibilité de capteurs à ultrasons (1) pour la détection d'écart d'objets par rapport à un véhicule, comprenant les étapes suivantes :
(a) réglage d'une sensibilité de capteur qui est choisie de telle sorte qu'un lobe de rayonnement acoustique (5) est émis par le capteur à ultrasons (1), lequel présente un point d'intersection (7) avec le sol,
(b) réalisation d'une mesure avec le capteur à ultrasons (1), les objets dans l'environnement du véhicule présentant une distance par rapport au véhicule supérieure à l'écart (11) entre le capteur à ultrasons (1) et le point d'intersection (7) du lobe de rayonnement acoustique (5) avec le sol (9), de sorte que l'écart (11) entre le capteur à ultrasons (1) et le point d'intersection (7) du lobe de rayonnement acoustique (5) avec le sol (9) est détecté comme l'écart le plus court par rapport à un objet,
(c) réglage de la sensibilité du capteur à ultrasons (1) en fonction de l'écart (11) détecté à l'étape (b) entre le capteur à ultrasons (1) et le point d'intersection (7) du lobe de rayonnement acoustique (5) avec le sol (9), de sorte qu'après le réglage de la sensibilité, le point (31) le plus proche du sol (9) du lobe de rayonnement acoustique ne se trouve pas à moins d'un écart prédéfini (33) par rapport au sol (9),
**caractérisé en ce que**
avant le réglage de la sensibilité du capteur à ultrasons (1), la hauteur de montage (3) du capteur à ultrasons (1) est définie à partir de l'écart (11) entre le capteur à ultrasons (1) et le point d'intersection (7) du lobe de rayonnement acoustique (5) avec le sol (9), et **en ce que** pour vérifier la hauteur de montage (3) déterminée, au moins deux sensibilités différentes du capteur à ultrasons (1) sont réglées, l'écart entre le capteur à ultrasons (1) et le point d'intersection (7, 25) du lobe de rayonnement acoustique (5, 23) respectif avec le sol (9) est défini avec chacune des sensibilités, la hauteur de montage (3) est respectivement calculée à partir des écarts (11, 27) et les hauteurs de montage (3) calculées sont comparées entre elles.

2. Procédé selon la revendication 1, **caractérisé en ce que** la mesure à l'étape (b) est effectuée pendant le déplacement à des vitesses supérieures ou à l'arrêt.

3. Procédé selon la revendication 2, **caractérisé en ce que** la mesure n'est effectuée à l'arrêt que lorsqu'aucun rapport n'est engagé et/ou le frein de stationnement est actionné.

4. Procédé selon la revendication 1, **caractérisé en ce que** la vérification du réglage de la sensibilité est effectuée continuellement pendant le fonctionnement du véhicule.

5. Procédé selon l'une des revendications 1 à 4, **caractérisé en ce que** le réglage de la sensibilité du capteur à ultrasons (1) est effectué avec une courbe caractéristique de capteur mémorisée.

6. Procédé selon l'une des revendications 1 à 5, **caractérisé en ce qu'**une courbe caractéristique adaptée à la situation est déterminée en vue du réglage de la sensibilité du capteur à ultrasons (1).
